# EUROPEAN PATENT APPLICATION

(11) **EP 4 648 553 A1**
(43) Date of publication of application: **12.11.2025**
(21) Application number: 25173887.8
(22) Date of filing: 02.05.2025
(51) Int. Cl.: H05B 6/12

(54) **SUBSTRATE FOR HOME APPLIANCE AND INDUCTION HEATING TYPE COOKTOP INCLUDING THE SAME**

(30) Priority: 08.05.2024 KR 20240060834
(71) Applicant: LG Electronics Inc., Yeongdeungpo-gu Seoul 07336 (KR)
(72) Inventor: KIM, Juwon, 07796 Seoul (KR); KIM, Ju Hyeong, 07796 Seoul (KR); HWANG, Jongwon, 07796 Seoul (KR); JUN, Hyunwoo, 07796 Seoul (KR); KIM, Taeho, 07796 Seoul (KR)
(74) Representative: Vossius & Partner Patentanwälte Rechtsanwälte mbB

(57) **Abstract**

Disclosed is a novel substrate for home appliances which has high heat resistance and anti-discoloration performance. The novel substrate for home appliances includes: a main substrate; and a colored coating stack disposed on a surface of the main substrate, wherein the colored coating stack includes: an adhesive layer in contact with the surface of the main substrate, a color layer disposed on an upper surface of the adhesive layer; and a protective layer disposed on an upper surface of the color layer.

## Description

### BACKGROUND

### Field

The present disclosure relates to a substrate for home appliances and an induction heating type cooktop including the same.

### Description of Related Art

Various types of cooking utensils are used to heat food at home or in restaurants. In the related art, a gas range using gas as a fuel has been widely used, but recently, devices for heating a cooking vessel such as a heating target object, for example, a pot, using electricity without using gas have been widely distributed.

A scheme of heating a heating target object using electricity is largely classified into a resistive heating scheme and an induction heating scheme. The electric resistance scheme is a scheme of heating a heating target object by transferring heat generated when a current flows through a non-metal heating element such as a metal resistance line or silicon carbide to the heating target object (e.g., a cooking vessel) through radiation or conduction. In addition, the induction heating scheme is a scheme in which an eddy current is generated in a heating target object made of a metal component using a magnetic field generated around a coil when high frequency power of a predetermined magnitude is applied to the coil, so that the heating target object itself is heated.

In recent years, the induction heating scheme is generally applied to a cooktop.

In general, a ceramic glass material having excellent heat resistance is used as a material of a top of the cooktop.

The ceramic glass applied to the cooktop should have sufficiently low transmittance so that the heating parts disposed thereunder are not visible, and should be able to withstand the local high temperature during the cooking process.

Conventionally, a scheme of coloring the ceramic glass or imparting to a colorless transparent ceramic glass by coating a single layer or a multilayer coating thereon has been adopted.

The coating may be applied in various ways. A first coating scheme may be a deposition scheme. However, the deposition scheme has a high process cost and a low degree of freedom of color. In addition, a coating resulting from the deposition type coating has a low concealing power due to a thin thickness thereof. A second coating scheme may be an enamel coating scheme. Although the enamel coating may be used at high temperatures, defects such as cracks may occur because a difference between thermal expansion coefficients ceramic of the glass and the enamel coating is large. A third coating scheme may be a fluoropolymer coating scheme. However, the use of fluoropolymer coating is limited due to the regulation of a perfluorinated compound. A fourth coating scheme may be a silicone coating scheme. The silicon material has excellent durability at high temperatures. However, when the silicon coating is applied to the cooktop ceramic glass, the coating is peeled off or the coating is discolored.

### SUMMARY

In order to solve the above-described technical problems, a technical purpose of the present disclosure is to provide a novel substrate for home appliances that has secured a degree of freedom of color while reducing a cost.

In addition, a technical purpose of the present disclosure is to provide a novel substrate for home appliances that has high heat resistance and anti-discoloration performance.

In addition, a technical purpose of the present disclosure is to provide a novel substrate for home appliances capable of securing long-term reliability even in a high-temperature environment.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

In a substrate for home appliances according to the present disclosure, a colored coating stack including an adhesive layer, a color layer, and a protective layer is coated on one surface of a main substrate. Accordingly, the present disclosure may provide the substrate for home appliances which has secured a degree of freedom of color while reducing the cost. In addition, the substrate for home appliances of the present disclosure has excellent heat resistance and discoloration prevention performance.

Thus, a first aspect of the present disclosure provides a substrate for home appliances, the substrate comprising: a main substrate; and a colored coating stack disposed on a surface of the main substrate, wherein the colored coating stack includes: an adhesive layer in contact with the surface of the main substrate, a color layer disposed on an upper surface of the adhesive layer; and a protective layer disposed on an upper surface of the color layer.

In accordance with some embodiments of the substrate for home appliances, the color layer is formed using a color layer paste coating solution including a phenyl-based polysiloxane and a phosphite-based antioxidant.

In accordance with some embodiments of the substrate for home appliances, the color layer paste coating solution includes: 30 to 60 wt % of the phenyl-based polysiloxane; 0.01 to 1 wt % of the antioxidant; 8 to 20 wt % of the effect pigment; 1 to 10 wt % of an inorganic color pigment; and 10 to 60 wt % of a solvent.

In addition, the induction heating type cooktop according to a second aspect of the present disclosure may include the working coil for heating the magnetic body and the heating thin-film coating for heating the non-magnetic body and thus heat both the magnetic body and the non-magnetic body.

The induction heating type cooktop according to the present disclosure includes a working coil and a heating thin-film coating overlapping each other in a vertical direction, wherein the heating thin-film coating has a stacked structure in which an adhesive layer and a heating layer are sequentially stacked, and has at least one of magnetic property and non-magnetic property so that an eddy current may be induced in the heating thin-film coating under an operation of the working coil and thus the heating thin-film coating may be inductively heated.

In addition, the skin depth of the heating thin-film coating is deeper than the thickness of the heating thin-film coating. Thus, in heating the heating target object made of a magnetic material, the magnetic field generated from the working coil passes through the thin-film and is transmitted to the heating target object, thereby inducing an eddy current in the heating target object.

In addition, in heating the heating target object made of a non-magnetic material, an eddy current may be induced in the heating thin-film coating under the magnetic field generated from the working coil.

Accordingly, the heating target object may be directly or indirectly heated using the same heat source.

In addition, the induction heating type cooktop of the present disclosure includes an upper plate which is embodied as the above-described substrate for home appliances. Accordingly, the cooktop of the present disclosure has excellent durability and reliability.

The present disclosure may provide a novel substrate for home appliances which secures a degree of freedom of color while reducing the cost. In addition, the present disclosure may provide a novel substrate for home appliances which has high heat resistance and anti-discoloration performance. In addition, the present disclosure may provide a novel substrate for home appliances capable of securing long-term reliability even in a high-temperature environment.

In addition, the induction heating type cooktop according to the present disclosure may heat both a magnetic body and a non-magnetic body. In addition, the induction heating type cooktop according to the present disclosure may heat the heating target object regardless of the placement position and type of the heating target object. Accordingly, the user may place and heat the heating target object on an arbitrary heating area on the upper plate without having to determine whether the heating target object is made of a magnetic material or a non-magnetic material.

In addition, the induction heating type cooktop according to the present disclosure may directly or indirectly heat the heating target object using the same heat source. Thus, there is no need to provide a separate heating plate or a radiant heater. Accordingly, the induction heating type cooktop of the present disclosure may increase heating efficiency and reduce a material cost.

Effects of the present disclosure are not limited to the effects mentioned above, and other effects not mentioned will be clearly understood by those skilled in the art from the descriptions below.

### BRIEF DESCRIPTION OF DRAWINGS

FIG. 1 is a cross-sectional view of a substrate for home appliances according to an embodiment of the present disclosure.
FIG. 2 is a diagram for illustrating an induction heating type cooktop according to an embodiment of the present disclosure.
FIG. 3 is a diagram for illustrating components disposed inside a casing of the induction heating type cooktop illustrated in FIG. 2.
FIGS. 4 and 5 are diagrams showing embodiments of a heating thin-film coating according to the present disclosure.
FIGS. 6 and 7 are diagrams illustrating a relationship between a thickness and a skin depth of a heating module.
FIGS. 8 and 9 are diagrams illustrating a change in impedance between a heating thin-film coating and a heating target object based on a type of the heating target object.
FIG. 10 is a diagram for illustrating an induction heating type cooktop according to another embodiment of the present disclosure.
FIG. 11 is a diagram for illustrating components disposed inside a casing of the induction heating type cooktop shown in FIG. 10.
FIG. 12 is a diagram for illustrating a state in which a heating target object is disposed on the cooktop of the induction heating type as illustrated in FIG. 10.
FIG. 13 is a graph showing evaluation of heat resistance performance of Present Example and Comparative Example.
FIG. 14 is a photograph of evaluating durability of Present Example and Comparative Example.

### DETAILED DESCRIPTIONS

The above-mentioned purpose, features and advantages are described in detail below with reference to the attached drawings. Accordingly, a person skilled in the art in the technical field to which the present disclosure belongs will be able to easily implement the technical idea of the present disclosure. In describing the present disclosure, when it is determined that a detailed description of the known technology related to the present disclosure may unnecessarily obscure the gist of the present disclosure, the detailed description thereof is omitted. Hereinafter, preferred embodiments according to the present disclosure will be described in detail with reference to the attached drawings. In the drawings, identical reference numerals are used to indicate identical or similar components.

Further, as used herein, when a layer, film, area, plate, or the like is disposed "on" or "on top" of another layer, film, area, plate, or the like, the former may directly contact the latter or still another layer, film, area, plate, or the like may be disposed between the former and the latter. As used herein, when a layer, film, area, plate, or the like is directly disposed "on" or "on top" of another layer, film, area, plate, or the like, the former directly contacts the latter and still another layer, film, area, plate, or the like is not disposed between the former and the latter. Further, as used herein, when a layer, film, area, plate, or the like is disposed "beneath" or "under" another layer, film, area, plate, or the like, the former may directly contact the latter or still another layer, film, area, plate, or the like may be disposed between the former and the latter. As used herein, when a layer, film, area, plate, or the like is directly disposed "beneath" or "under" another layer, film, area, plate, or the like, the former directly contacts the latter and still another layer, film, area, plate, or the like is not disposed between the former and the latter.

It will be understood that when an element or layer is referred to as being "connected to", or "coupled to" another element or layer, it may be directly connected to, or coupled to the other element or layer, or one or more intervening elements or layers may be present therebetween. In addition, it will also be understood that when an element or layer is referred to as being "between" two elements or layers, it may be the only element or layer between the two elements or layers, or one or more intervening elements or layers may also be present.

Hereinafter, a substrate for home appliances according to an embodiment of the present disclosure will be described.

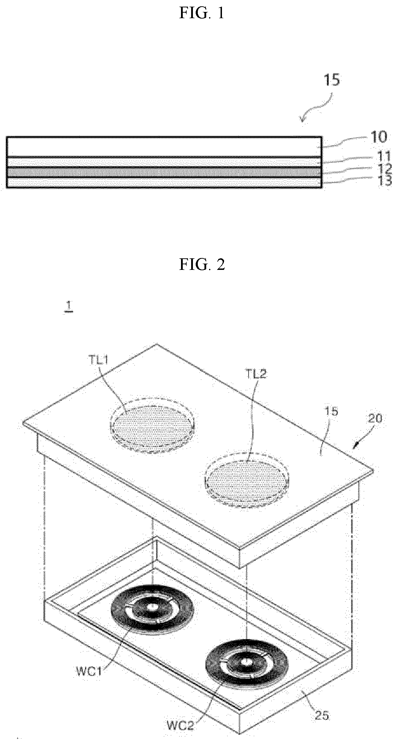

FIG. 1 is a cross-sectional view of a substrate for home appliances according to an embodiment of the present disclosure.

First, referring to FIG. 1, a substrate 15 for home appliances according to an embodiment of the present disclosure includes a main substrate 10, and a colored coating stack 11, 12, and 13 coated on one surface of the main substrate 10. In this regard, the colored coating stack includes an adhesive layer 11 in contact with the surface of the main substrate 10, a color layer 12 positioned on the adhesive layer 11, and a protective layer 13 positioned on the color layer 12.

The substrate 15 for home appliances according to the present disclosure includes the colored coating stack and may display various colors, and has excellent reliability even when being exposed to high temperatures for a long time.

First, the main substrate 10 may include any known substrate used for home appliances. In one example, the main substrate 10 may be made of a ceramic glass material.

The colored coating stack includes the adhesive layer 11. The adhesive layer 11 refers to a layer in contact with the surface of the substrate.

The adhesive layer 11 may be made of an adhesive layer paste coating solution containing methyl polysiloxane. The methyl polysiloxane is a component that strengthens the adhesion of the colored coating stack to the main substrate 10 made of a ceramic glass material.

In this regard, the adhesive layer paste coating solution may contain 30 to 70 wt % of the methyl-based polysiloxane and 30 to 70 wt % of a solvent.

The methyl polysiloxane may include a well-known methyl polysiloxane resin used in the art.

The solvent may include at least one selected from the group consisting of xylene, ethylbenzene, toluene, benzene, isopropyl alcohol (IPA), and butyl carbitol acetate (BCA).

The colored coating stack includes the color layer 12. The color layer 12 is a component to impart various colors to the substrate. In addition, the color layer 12 acts as impart durability to the substrate. The color layer 12 is disposed on the adhesive layer 11.

The color layer 12 may be made of a color layer paste coating solution including a phenyl-based polysiloxane and a phosphite-based antioxidant. The phenyl-based polysiloxane and the phosphite-based antioxidant reduce the rate at which the color layer 12 is decomposed due to oxidation. Accordingly, long-term reliability of the substrate for home appliances of the present disclosure may be secured. Specifically, the phosphite-based antioxidant may decompose hydroperoxide produced in the colored coating stack under high temperature/oxygen conditions. Accordingly, the colored coating stack is prevented from being discolored by the phosphite-based antioxidant, and long-term reliability of the substrate is maximized.

In addition, the color layer paste coating solution may further contain an effect pigment composed of a metal oxide-coated substrate. The substrate of the present disclosure may have improved heat resistance using the effect pigment.

In this regard, the color layer paste coating solution may include 30 to 60 wt % of the phenyl-based polysiloxane, 0.01 to 1 wt % of the antioxidant, 8 to 20 wt % of the effect pigment, 1 to 10 wt % of an inorganic color pigment, and 10 to 60 wt % of the solvent.

The phenyl-based polysiloxane may be a phenyl-based polysiloxane resin known in the art. A content of the phenyl-based polysiloxane may be in a range of 30 to 60 wt % based on a total weight of the color layer paste coating solution.

The antioxidant may include a phosphite-based antioxidant as described above. The phosphite-based antioxidant may be a phosphite-based antioxidant having a phenyl group, such as Tris(nonylphenyl) Phosphite, Triphenyl phosphite, diphenyl isodecyl phosphite, 2-ethylhexyl diphenyl phosphate, and Tris(2,4-di-tert-butylphenyl) phosphite. The phosphite-based antioxidant changes ROOH which causes decomposition of a polymer at high temperature into a ROH form, thereby improving heat resistance of the polymer itself. When the phosphite-based antioxidant is added in an amount greater than 1 wt %, based on a total weight of the color layer paste coating solution, the coating property may deteriorate, and thus the appearance quality of the substrate may deteriorate. Accordingly, it is preferable that the phosphite-based antioxidant is used in an amount of 0.01 to 1 wt % based on a total weight of the color layer paste coating solution.

The effect pigment may include a plate-shaped pearl pigment coated with a metal oxide. The metal oxide may be SiO₂, SnO₂, TiO₂, or the like. In addition, mica, alumina, or the like may be used as a material of a substrate of the effect pigment. The effect pigment may be added in an amount of 8 to 20 wt % based on a total weight of the color layer paste coating solution. When the content of the effect pigment is smaller than 8 wt %, the heat resistance of the coating may be deteriorated. In addition, when the content of the effect pigment exceeds 20 wt % based on a total weight of the color layer paste coating solution, the formation ability of the coating is deteriorated, and thus the stack may be peeled off.

The inorganic color pigment may include an oxide of at least one of Co, Sn, Al, Zn, and Zr. The inorganic color pigment may be used in an amount of 1 to 10 wt % based on a total weight of the color layer paste coating solution. When the content of the inorganic color pigment is smaller than 1 wt % based on a total weight of the color layer paste coating solution, the heat resistance of the coating may be deteriorated. In addition, when the content of the inorganic color pigment exceeds 10 wt %, the formation ability of the coating is deteriorated, and thus the stack may be peeled off.

The solvent may include one or more of Xylene, Ethylbenzene, Toluene, benzene, isopropyl alcohol (IPA), and butyl carbitol acetate (BCA). The content of the solvent may be in a range of 10 to 60 wt % based on a total weight of the color layer paste coating solution.

The colored coating stack includes the protective layer 13. The protective layer 13 has a function of protecting the color layer 12. Specifically, the protective layer 13 protects the stack from the scratching and minimizes exposure of the stack to oxygen. The protective layer 13 is disposed on the color layer 12.

The protective layer 13 may be made of a protective layer paste coating solution including an inorganic material or silica sol-gel. The inorganic material may include a glass frit-based inorganic coating.

Preferably, a thickness of the adhesive layer 11 may be in a range of 1 to 10 *µ*m, a thickness of the color layer 12 may be in a range of 30 to 100 *µ*m, and a thickness of the protective layer 13 may be in a range of 1 to 10 *µ*m.

The colored coating stack may preferably be formed in a screen printing manner. The adhesive layer 11 may be formed by coating the adhesive layer paste coating solution on one surface of the main substrate 10. The color layer 12 may be formed by directly coating the color layer paste coating solution on the adhesive layer 11 without a separate curing process on the adhesive layer 11. In this case, the color layer 12 may be formed by drying the color layer paste coating solution at about 200° C for 5 to 30 minutes and then curing the color layer paste coating solution at 400° C for 10 to 60 minutes. Thereafter, the protective layer paste coating solution may be coated on the color cutting layer 12 to form the protective layer 13.

Next, an induction heating type cooktop according to an embodiment of the present disclosure will be described below.

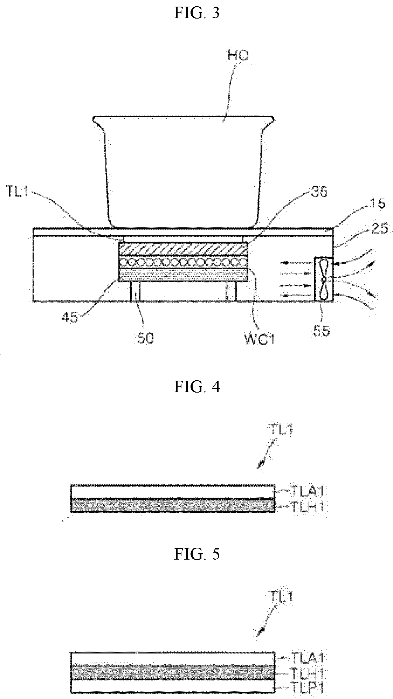

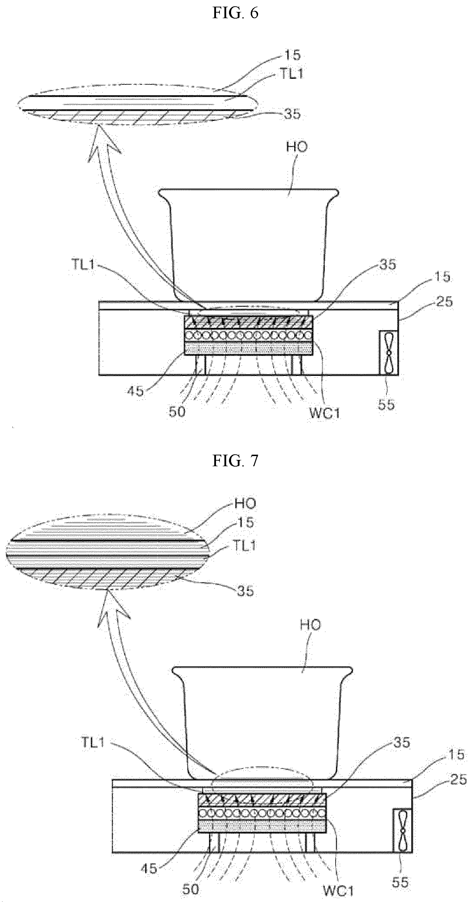

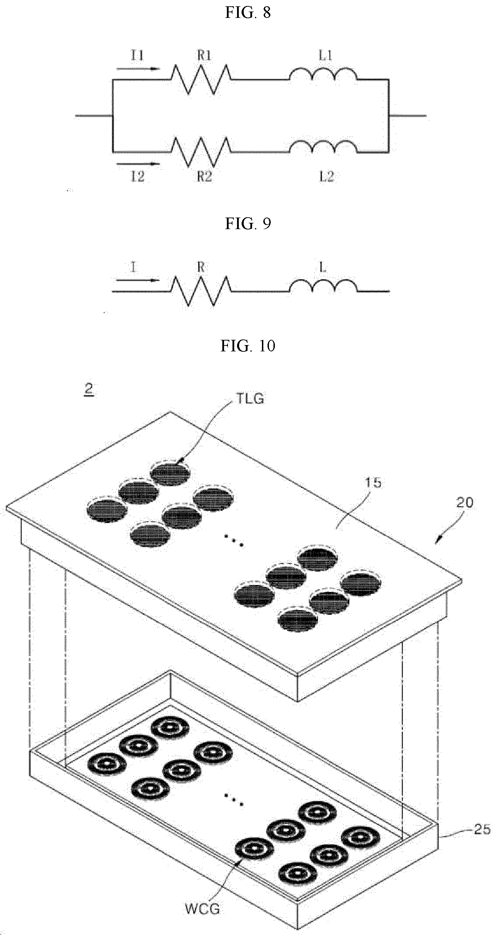

FIG. 2 is a diagram for illustrating an induction heating type cooktop according to an embodiment of the present disclosure. FIG. 3 is a diagram for illustrating components disposed inside a casing of the induction heating type cooktop illustrated in FIG. 2. FIGS. 4 and 5 are diagrams showing embodiments of a heating thin-film coating according to the present disclosure. FIGS. 6 and 7 are diagrams for illustrating a skin depth based on a relative permeability of a thin film. FIGS. 8 and 9 are diagrams for illustrating a change in impedance between a thin film and a heating target object based on a type of the heating target object.

First, referring to FIG. 2, an induction heating type cooktop 1 according to an embodiment of the present disclosure may include a casing 25, a cover plate 20, a working coil WC1 and WC2 (i.e., first and second working coils), and a heating thin-film coating TL1 and TL2 (i.e., first and second heating thin-film coatings).

The working coil WC1 and WC2 may be installed in the casing 25.

For reference, in addition to the working coil WC1 and WC2, various devices related to the operation of the working coil (for example, a power supply unit for providing AC power, a rectifying unit for rectifying AC power of the power supply unit into DC power, an inverter for converting the DC power rectified by the rectifying unit into resonance current via a switching operation and providing the resonance current to the working coil, a control module for controlling the operation of various devices in the induction heating type cooktop 1 (the control module includes a control module for an inverter for controlling the switching operation of the inverter and a control module for an input interface for controlling an input interface), a relay or a semiconductor switch for turning the working coil on or off, etc.) may be installed in the casing 25. However, detailed descriptions thereof will be omitted.

The cover plate 20 may be coupled to an upper end of the casing 25, and may be provided with an upper plate 15 on which a heating target object (not shown) is disposed. In this regard, the upper plate 15 is embodied as the above-described substrate 15 for home appliances. In this case, the colored coating stack of the substrate 15 may constitute a lower surface of the upper plate 15.

Specifically, the cover plate 20 may include the upper plate 15 on which the heating target object, such as a cooking container is placed.

In this regard, the upper plate 15 may include, for example, a glass material (e.g., ceramic glass).

In addition, the upper plate 15 may be provided with an input interface (not shown) that receives an input from a user and transmits the input to the above-described control module. In another example, the input interface may be provided at a position of the cooktop 1 other than the upper plate 15.

For reference, the input interface is a module for inputting, by the user, a heating intensity or an operation time of the induction heating type cooktop 1 as desired by the user, and may be variously embodied as a physical button, a touch panel, or the like. In addition, the input interface may include, for example, a power button, a lock button, a power level adjustment button (+, -), a timer adjustment button (+, -), a charging mode button, etc. The input interface may transmit an input provided from the user to the control module (not shown) for the input interface, and the control module for the input interface may transmit the input to the control module (not shown) for the inverter. In addition, the control module for the inverter may control the operation of the various devices (e.g., the working coil) based on the input (i.e., the user input) provided from the control module for the input interface. In this regard, detailed description thereof will be omitted.

Further, whether the working coils (e.g., the first and second working coils WC1 and WC2) operate and the heating intensity (i.e., heating power) of the working coils may be visually displayed in a shape of a burner on the upper plate 15. The shape of the burner may be displayed using an indicator (not shown) including a plurality of light emitting elements (e.g., LED) provided in the casing 25.

The working coil WC1 and WC2 may include the first and second working coils WC1 and WC2 installed inside the casing 25 to heat the heating target object.

Specifically, the operation of the first and second working coils WC1 and WC2 may be controlled by the control module for the inverter. When the heating target object is placed on the upper plate 15, the operation of the first and second working coils WC1 and WC2 may be controlled by the control module for the inverter.

In addition, the first and second working coils WC1 and WC2 may directly heat the heating target object (i.e., magnetic body) having magnetism, or indirectly heat the heating target object (i.e., non-magnetic body) not having magnetism through the first and second heating thin-film coatings TL1 and TL2 to be described later, respectively.

In addition, the first and second working coils WC1 and WC2 may heat the heating target object in an induction heating scheme, and may be positioned to overlap the first and second heating thin-film coatings TL1 and TL2 in a vertical direction, respectively.

For reference, the two working coils WC1 and WC2 are illustrated as being installed in the casing 25 in FIG. 2. However, embodiments of the present disclosures are not limited thereto. That is, one or three or more working coils may be installed in the casing 25. However, for convenience of illustration, in an embodiment of the present disclosure, the two working coils WC1 and WC2 are installed in the casing 25 by way of example.

The heating thin-film coating may include the first and second heating thin-film coatings TL1 and TL2. The heating thin-film coating is disposed on one surface of the upper plate or one surface of an thermal insulator. In other words, the heating thin-film coating may be formed on the upper surface or the lower surface of the upper plate, or may be formed on the upper surface or the lower surface of the thermal insulator.

In one example, the first and second heating thin-film coatings TL1 and TL2 may be disposed on the lower surface of the upper plate 15 and may be spaced apart from each other.

In addition, the first and second heating thin-film coatings TL1 and TL2 may overlap the first and second working coils WC1 and WC2 in the vertical direction, respectively.

In addition, each of the first and second heating thin-film coatings TL1 and TL2 may have at least one (i.e., be magnetic, non-magnetic, or both magnetic and non-magnetic) of magnetic and non-magnetic properties.

As shown in FIG. 4, the heating thin-film coating TL1 according to the present disclosure has a stacked structure in which an adhesive layer TLA1 and a heating layer TLH1 are sequentially stacked.

The adhesive layer TLA1 acts to bond the upper plate or the insulation material and the heating layer TLH1 to each other. In addition, the adhesive layer TLA1 protects the heating layer TLH1 from the ion elution phenomenon of the upper plate caused by the application of the high temperature heat for a long period of time, and thus prevents the performance of the heating layer TLH1 from deteriorating.

The adhesive layer TLA1 may include one or more of an inorganic material and a metal oxide for implementing the above-described function. In a specific example, the adhesive layer TLA1 may include a transition metal such as Ti, Cr, Fe, Ni, or Cu or a metal oxide such as Al₂O₃ or SiO₂.

Preferably, the adhesive layer TLA1 may be formed by coating an adhesive layer paste coating solution including one or more of the inorganic material and the metal oxide. More specifically, the adhesive layer paste coating solution may include 60 to 85 wt % of one or more of the inorganic material and the metal oxide, 5 to 25 wt % of a binder resin, 5 to 25 wt % of a solvent, and 0.5 to 5 wt % of an inorganic filler. In addition, the adhesive layer paste coating solution may further include additives such as a leveling agent, an antifoaming agent, and a dispersing agent, if necessary.

At least one of the inorganic material and the metal oxide may include at least one selected from V₂O₅, P₂O₅, PbO, B₂O₃, Bi₂O₃, ZnO, SiO₂, Al₂O₃, BaO, MoO₃, TeO₂, Ta₂O₅, Nb₂O₅, and CaO. The inorganic material and the metal oxide may be used in the form of particles, which may include all types of particles such as spherical, plate shaped, and atypical particles. A softening point of the above listed materials may satisfy a range of 400 to 800°C, and a crystallization temperature Tc thereof may satisfy a range of 450 to 850°C. The size of the particles may be in a range of 1 *µ*m to 5 *µ*m. When at least one of the inorganic material and the metal oxide is contained in an amount smaller than 60% by weight based on a total weight of the adhesive layer paste coating solution, the protection ability for protecting the heating layer may be deteriorated. On the other hand, when the content of at least one of the inorganic material and the metal oxide exceeds 85 wt % based on a total weight of the adhesive layer paste coating solution, the work performance may be deteriorated and the cracks may occur.

In addition, the binder resin acts to fix one or more of the inorganic material and the metal oxide to form a three-dimensional chain structure. In addition, the binder resin affects uniform coating film formation, durability, chemical resistance, adhesion to the substrate, etc. If the binder is not entirely thermally decomposed during the firing process, it may constitute pores and remain in the electrode, thereby increasing the resistivity of the thin-film. The binder resin may include polyurethane, polyester, polyacryl, polycelloluuse, or the like having a thermal decomposition temperature of about 100 to 300°C and a molecular weight of about 2,000 to about 2,000,000. When the content of the binder resin is smaller than 5 wt % based on a total weight of the adhesive layer paste coating solution, the viscosity is low, and thus a uniform coating film may not be formed such that the resistivity may be increased. When the content of the binder resin exceeds 25 wt %, the coatability may be lowered.

The solvent may improve coatability and workability of the coating solution. The thermal decomposition temperature of the solvent may be preferably within 50 to 200°C, and the solvent may include at least one selected from the group including butyl cellosolve, ethylene glycol monobutyl ether acetate, ethyl carbitol, ethyl carbitol acetate, butyl carbitol, ethoxyethyl acetate, butyl acetate, propylene glycol monotylether, ethyl alcohol, butyl alcohol, etc. As described above, the content of the solvent is preferably in a range of 5 to 25 wt% based on a total weight of the adhesive layer paste coating solution.

The inorganic filler is an additive used to improve the physical properties of the coating and may include Al₂O₃, Al(OH)₃, TiO₂, CaCO₃, CaO, Ca(OH)₂, SiO₂, BaSO₄, ZnO, Glass Fiber, Talc, etc. in an example of the present disclosure. One or more kinds of inorganic fillers may be used according to the purpose of use of the inorganic filler. The size of the inorganic filler may be in a range of 1 *µ*m to 5 *µ*m, and the content thereof is preferably 0.5 to 5 wt % based on a total weight of the adhesive layer paste coating solution.

In addition, to improve the dispersibility, storage safety, and coating performance of the coating, the additive may include a leveling agent, an antifoaming agent, a dispersant, a fluidity regulator, or the like. Preferably, the additive may include a silicone-based material (polyether hydroxy poly methyl silane-based material, polyether dimethyl polysiloxane-based material, poly methylalkylsiloxane-based material, polyether polymethylalkylsiloxane-based material, polyester hydroxy polymethylsiloxane-based material, polyether polymethylsiloxane-based material, polyether polymethylsiloxane-based material), a non-silicone-based material (non-ionic polyacryl-based material, ionic polyacryl-based material, polyacrylate-based material, alcohol alkoxylate-based material, or acrylate-based material), alcohol-based material (ethanol, butanol). Preferably, 0.05 to 5 wt % of the additive may be added to the coating solution.

A thickness of the adhesive layer TLA1 is not particularly limited. In one example, the thickness thereof may be in a range of 0.01 *µ*m to 10 *µ*m. When the thickness of the adhesive layer TLA1 is smaller than 0.01 *µ*m, the adhesive strength between the heating layer HL and the upper plate ST may be deteriorated, and the protection performance for protecting the heating layer HL may not be sufficient. On the other hand, when the thickness of the adhesive layer TLA1 exceeds 10 *µ*m, the induction heating function of the heating thin-film coating TL1 may be deteriorated.

Next, the heating layer TLH1 acts to enable the cooktop according to the present invention to selectively heat the heating target object.

The heating layer TLH1 may include one or more materials among a metal and a metal alloy for the above-described function expression. In a specific example, the heating layer TLH1 may include one or two or more metals of Sn, Co, Cr, Fe, Ni, Al, Cu, Ag, and Au.

Preferably, the heating layer TLH1 may be formed by coating a heating layer paste coating solution including at least one of the metal and the metal alloy. More specifically, the heating layer paste coating solution may include 40 to 90 wt % of one or more of the metal and the metal alloy, 2 to 25 wt % of the binder resin, 5 to 25 wt % of the solvent, 0.5 to 5 wt % of the inorganic material, and 0.5 to 5 wt % of the inorganic filler.

One or more of the metals and metal alloys may include one or more of Pd, Au, Pt, W, Ni, RuO₂, Ag, and Cu, and may be used in the form of particles. The particle shape may include a spherical, plate, atypical shape. The shape may be selected so as to increase the contact area between the particles. The size of the particles is preferably in a range of 0.5 *µ*m to 20 *µ*m, and the particles of a single or two to four sizes may be mixed with each other to increase a contact density between the particles. When the content of at least one of the metal and the metal alloy is smaller than 40 wt % based on a total weight of the heating layer paste coating solution, the heating performance of the heating layer may be deteriorated. When the content thereof is greater than 90 wt % based on a total weight of the heating layer paste coating solution, film flatness, and sintering property may be deteriorated in the coating process and agglomeration may occur in the coating process.

In addition, the binder resin acts to fix one or more of the metal and the metal alloy to form a three-dimensional chain structure. In addition, the binder resin affects uniform coating film formation, durability, chemical resistance, adhesion to the substrate, etc. If the binder is not entirely thermally decomposed during the firing process, it may constitute pores and remain in the electrode, thereby increasing the resistivity of the thin-film. The binder resin may include polyurethane, polyester, polyacryl, polycelloluuse, or the like having a thermal decomposition temperature of about 100 to 300°C and a molecular weight of about 2,000 to about 2,000,000. When the content of the binder resin is smaller than 2 wt % based on a total weight of the heating layer paste coating solution, the viscosity is low, and thus a uniform coating film may not be formed such that the resistivity may be increased. When the content of the binder resin exceeds 25 wt %, the coatability may be lowered.

The solvent may improve coatability and workability of the coating solution. The thermal decomposition temperature of the solvent may be preferably within 50 to 200°C, and the solvent may include at least one selected from the group including butyl cellosolve, ethylene glycol monobutyl ether acetate, ethyl carbitol, ethyl carbitol acetate, butyl carbitol, ethoxyethyl acetate, butyl acetate, propylene glycol monotylether, ethyl alcohol, butyl alcohol, etc. As described above, the content of the solvent is preferably in a range of 5 to 25 wt% based on a total weight of the heating layer paste coating solution.

The inorganic material may be used to improve the adhesion of the heating layer. The inorganic material may include one or more of V₂O₅, P₂O₅, PbO, B₂O₃, Bi₂O₃, ZnO, SiO₂, B₂O₃, Al₂O₃, BaO, MoO₃, TeO₂, Ta₂O₅, Nb₂O₅, and CaO, and may be used in the form of particles. The particle shape may include a spherical shape, a plate shape, and an atypical shape, and the shapes may be used alone or in a combination of two to six shapes. The softening point of the particles is preferably in a range of 400 to 700°C, and the crystallization temperature Tc thereof is preferably in a range of 450 to 750°C. The size of the particles may be in a range of 1 *µ*m to 5 *µ*m, and the content thereof is preferably 0.1 to 5 wt % based on a total weight of the heating layer paste coating solution.

The inorganic filler is an additive used to improve the physical properties of the coating and may include Al₂O₃, Al(OH)₃, TiO₂, CaCO₃, CaO, Ca(OH)₂, SiO₂, BaSO₄, ZnO, Glass Fiber, Talc, etc. in an example of the present disclosure. One or more kinds of inorganic fillers may be used according to the purpose of use of the inorganic filler. The size of the inorganic filler may be in a range of 1 *µ*m to 5 *µ*m, and the content thereof is preferably 0.5 to 5 wt % based on a total weight of the heating layer paste coating solution.

In addition, to improve the dispersibility, storage safety, and coating performance of the coating, the additive may include a leveling agent, an antifoaming agent, a dispersant, a fluidity regulator, or the like. Preferably, the additive may include a silicone-based material (polyether hydroxy poly methyl silane-based material, polyether dimethyl polysiloxane-based material, poly methylalkylsiloxane-based material, polyether polymethylalkylsiloxane-based material, polyester hydroxy polymethylsiloxane-based material, polyether polymethylsiloxane-based material, polyether polymethylsiloxane-based material), a non-silicone-based material (non-ionic polyacryl-based material, ionic polyacryl-based material, polyacrylate-based material, alcohol alkoxylate-based material, or acrylate-based material), alcohol-based material (ethanol, butanol). Preferably, 0.05 to 5 wt % of the additive may be added to the coating solution.

A thickness of the heating layer TLH1 is not particularly limited. In one example, the thickness thereof may be in a range of 1 *µ*m to 60 *µ*m. When the thickness of the heating layer TLH1 is smaller than 1 *µ*m, the selective heating function may be deteriorated. On the other hand, when the thickness of the heating layer TLH1 exceeds 60 *µ*m, the heating performance itself may be deteriorated.

In another example, the heating layer TLH1 may include a stack of one or more multiple layers (not shown) as required.

Next, referring to FIG. 5, the heating thin-film coating TL1 according to the present disclosure may further include a protective layer TLP1. The heating thin-film coating TL1 according to the present disclosure may be formed on either one surface of the upper plate or the thermal insulator as described above. In particular, when the heating thin-film coating (TL1) according to the present disclosure is formed on the upper surface of the upper plate, it is preferable that the heating thin-film coating TL1 further includes the protective layer TLP1 in order to protect the heating layer from the heating target object such as a cooking container. Accordingly, the protective layer TLP1 is formed on one surface of the heating layer TLH1 (an opposite surface to one surface thereof on which the adhesive layer TLA1 is formed).

The protective layer TLP1 may include one or more of an inorganic material and a metal oxide to protect the heating layer TLH1. In a specific example, the protective layer may include one or two or more oxides of SiO₂, Al₂O₃, CeO₂, MgO, etc.

The protective layer TLP1 may be made of the same paste coating solution as the adhesive layer paste coating solution.

A thickness of the protective layer TLP1 is not particularly limited. In one example, a thickness thereof may be in a range of 1 *µ*m to 60 *µ*m. When the thickness of the protective layer TLP 1 is smaller than 1 *µ*m, the protective performance for protecting the heating layer HL may not be sufficient. On the other hand, when the thickness of the protective layer TLP1 exceeds 60 *µ*m, the induction heating function of the heating thin-film coating TLA1 may be deteriorated.

It is preferable that the heating thin-film coating TL1 according to the present disclosure described above is formed in a paste coating manner. In accordance with the present disclosure, the coating scheme is not particularly limited. According to the present disclosure, the coating scheme may include one of gravure printing, spray printing, and screen printing.

When the heating thin-film coating TL1 is formed in the paste coating scheme, a thin film having a uniform overall density may be obtained. Accordingly, the heating thin-film coating TL1 formed in the paste coating scheme has excellent basic performance such as heating performance, etc., compared to a thin film formed in other schemes than the paste coating scheme.

The paste coating process according to the present disclosure may be performed in the order of washing, coating, drying, sintering, and cooling. The adhesive layer may be first formed on the surface of an object such as the upper plate or the thermal insulator, and then the heating layer may be formed thereon. In accordance with the present disclosure, in order to secure the conductivity of the heating coating thin-film, sintering is preferably performed in a temperature range of 400 to 900°C.

In addition, the paste coating solution of each of the components constituting the heating thin-film coating TL1 is the same as described above.

Each of the first and second heating thin-film coatings TL1 and TL2 is formed to have a thickness sized such that each of the first and second heating thin-film coatings TL1 and TL2 is inductively heated by the working coil. Detailed description thereof will be set forth later.

In addition, a diameter (i.e., a size) of each of the first and second heating thin-film coatings TL1 and TL2 may be smaller than a diameter of the upper plate 15.

Subsequently, referring to FIG. 3, the induction heating type cooktop 1 according to an embodiment of the present disclosure may further include an thermal insulator 35, a shielding plate 45, a support member 50, and a cooling fan 55.

For reference, the components disposed around the first working coil WC1 and the components disposed around the second working coil WC2 (see FIG. 1) are identical with each other. Thus, hereinafter, for convenience of description, the components (the first heating thin-film coating TL1, the thermal insulator 35, the shielding plate 45, the support member 50, and the cooling fan 55) around the first working coil WC1 will be mainly described.

The thermal insulator 35 may be disposed between the first heating thin-film coating TL1 and the first working coil WC1.

The thermal insulator 35 may prevent heat generated while the first heating thin-film coating TL1 or the heating target object HO is heated under the operation of the first working coil WC1 from being transferred to the first working coil WC1.

That is, when the first heating thin-film coating TL1 or the heating target object HO is heated under electromagnetic induction of the first working coil WC1, heat of the first heating thin-film coating TL1 or the heating target object HO may be transferred to the upper plate 15, and heat of the upper plate 15 may be transferred back to the first working coil WC1, thereby damaging the first working coil WC1.

The thermal insulator 35 blocks the heat transferred to the first working coil WC1 as described above, thereby preventing the first working coil WC1 from being damaged by the heat, and further preventing the heating performance of the first working coil WC1 from being deteriorated.

For reference, although not an essential component but an optional component, a spacer (not shown) may be installed between the first working coil WC1 and the thermal insulator 35.

Specifically, the spacer may be inserted into between the first working coil WC1 and the thermal insulator 35 so that the first working coil WC1 and the thermal insulator 35 do not directly contact each other. Accordingly, the spacer may block the heat generated while the first heating thin-film coating TL1 or the heating target object HO is heated under the operation of the first working coil WC1 from being transferred to the first working coil WC1 through the thermal insulator 35.

Since the spacer may partially share the role of the thermal insulator 35, a thickness of the thermal insulator 35 may be minimized, and accordingly, a distance between the heating target object HO and the first working coil WC1 may be minimized.

In addition, a plurality of spacers may be provided. In this case, the plurality of spacers may be disposed between the first working coil WC1 and the thermal insulator 35 so as to be spaced apart from each other. Accordingly, the air sucked into the casing 25 by the cooling fan 55 to be described later may be guided by the spacer to the first working coil WC1.

That is, the spacer may guide the air introduced into the casing 25 by the cooling fan 55 to be appropriately transferred to the first working coil WC1, thereby improving the cooling efficiency of the first working coil WC1.

The shielding plate 45 may be mounted on a lower surface of the first working coil WC1 so as to prevent a magnetic field generated when the first working coil WC1 is operating from being transmitted downwardly.

Specifically, the shielding plate 45 may prevent the magnetic field generated when the first working coil WC1 is operating from being transmitted downwardly, and may be supported on an upper surface of the support member 50.

The support member 50 may be installed between a lower surface of the shielding plate 45 and a lower surface of the casing 25 to support and push the shielding plate 45 upwardly.

Specifically, the support member 50 may support and push the shielding plate 45 upwardly to indirectly support and push the first working coil WC1, the thermal insulator 35, and the first heating thin-film coating TL1 upwardly. Thus, a spacing between the first working coil WC1 and the heating target object HO may be constantly maintained.

For reference, the support member 50 may include, for example, an elastic body (e.g., a spring) for supporting and pushing the shielding plate 45 upwardly in an elastic manner. However, embodiments of the present disclosure are not limited thereto. In addition, since the support member 50 is not an essential component but an optional component, it may be omitted from the induction heating type cooktop 1.

The cooling fan 55 may be installed inside the casing 25 and may be configured to cool the first working coil WC1.

Specifically, the cooling fan 55 may be controlled to be driven by the above-described control module, and may be installed on the sidewall of the casing 25. In another example, the cooling fan 55 may be installed at a position other than the side wall of the casing 25, but in an embodiment of the present disclosure, for convenience of description, a case in which the cooling fan 55 is installed on the side wall of the casing 25 will be described as an example.

In addition, as illustrated in FIG. 2, the cooling fan 55 may suction air outside the casing 25 and transmit the air to the first working coil WC1, or may suction air (particularly, heat) inside the casing 25 and discharge the air to the outside out of the casing 25.

Thus, efficient cooling of the components (in particular, the first working coil WC1) inside the casing 25 is achieved.

In addition, as described above, the air outside the casing 25 transferred to the first working coil WC1 by the cooling fan 55 may be guided by the spacer toward the first working coil WC1. Accordingly, direct and efficient cooling of the first working coil WC1 is achieved, thereby improving the durability of the first working coil WC1 (that is, to improving the durability thereof according to the prevention of heat damage).

As described above, the induction heating type cooktop 1 according to an embodiment of the present disclosure may have the above-described features and configurations. Hereinafter, the features and configurations of the above-described heating module will be described in more detail with reference to FIGS. 6 to 9.

For reference, the thicknesses of the respective components illustrated in FIGS. 6 and 7 are schematically expressed for convenience of illustration, and are not related to the actual scale, and the relative difference between the thicknesses of the respective components is also not related to the actual scale.

FIGS. 6 and 7 are diagrams illustrating a relationship between a thickness and a skin depth of a thin film. FIGS. 8 and 9 are diagrams for illustrating a change in impedance between a thin film and a heating target object according to a type of the heating target object.

For reference, the first heating thin-film coating TL1 and the second heating thin-film coating TL2 have the same technical features. Hereinafter, for convenience of description, the first heating thin-film coating TL1 will be mainly described by way of example.

The features of the first heating thin-film coating TL1 will be described as follows.

The first heating thin-film coating TL1 may be made of a material having low relative permeability, and the specific material thereof is the same as described above.

Specifically, the relative permeability of the first heating thin-film coating TL1 may be low, and the skin depth of the first heating thin-film coating TL1 may be deep. In this regard, the skin depth may mean a current penetration depth from a material surface, and the relative permeability may be inversely related to the skin depth. Accordingly, as the relative permeability of the first heating thin-film coating TL1 decreases, the skin depth of the first heating thin-film coating TL1 becomes deeper.

In addition, the skin depth of the first heating thin-film coating TL1 may be deeper than the thickness of the first heating thin-film coating TL1. That is, since the first heating thin-film coating TL1 has a small thickness and the skin depth of the first heating thin-film coating TL1 is deeper than the thickness of the first heating thin-film coating TL1, the magnetic field generated by the first working coil WC1 passes through the first heating thin-film coating TL1 and is transmitted to the heating target object HO, thereby inducing an eddy current to the heating target object HO.

That is, as illustrated in FIG. 6, , it may be identified that when the skin depth of the first heating thin-film coating TL1 is shallower than the thickness of the first heating thin-film coating TL1 it is difficult for the magnetic field generated by the first working coil WC1 to reach the heating target object HO .

However, as in an embodiment of the present disclosure (i.e., as illustrated in FIG. 6), it may be identified that when the skin depth of the first heating thin-film coating TL1 is greater than the thickness of the first heating thin-film coating TL1, a significant portion of the magnetic field generated by the first working coil WC1 is transmitted to the heating target object HO . That is, in an embodiment of the present disclosure, since the skin depth of the first heating thin-film coating TL1 is deeper than the thickness of the first heating thin-film coating TL1, the magnetic field generated by the first working coil WC1 passes through the first heating thin-film coating TL1 and then, a significant portion thereof is exhausted in the heating target object HO, and thus, the heating target object HO may be mainly heated.

Since the first heating thin-film coating TL1 has the small thickness as described above, the first heating thin-film coating TL1 may have a resistance value sized that the first heating thin-film coating TL1 can be heated by the first working coil WC1.

Specifically, the thickness of the first heating thin-film coating TL1 may be inversely proportional to the resistance value (i.e., surface resistance value) of a first heating module HM1. That is, as the thickness of the first heating thin-film coating TL1 decreases, the resistance value (i.e., surface resistance) of the first heating thin-film coating TL1 increases.

Since the first heating thin-film coating TL1 having the above characteristics is intended to heat a non-magnetic material, the impedance characteristic between the first heating thin-film coating TL1 and the heating target object HO may be changed according to whether the heating target object HO disposed on the upper surface of the upper plate 15 is made of a magnetic material or a non-magnetic material.

First, a case where the heating target object is made of a magnetic material is as follows.

Referring to FIGS. 3 and 8, when the heating target object HO made of a magnetic material is disposed on the upper surface of the upper plate 15 and the first working coil WC1 operates, a resistance component R1 and an inductance component L1 of the heating target object HO made of a magnetic material may constitute an equivalent circuit with a resistance component R2 and an inductance component L2 of the first heating module HM1.

In this case, an impedance of the heating target object having magnetism in the equivalent circuit (that is, the impedance composed of R1 and L1) may be smaller than an impedance of the first heating thin-film coating TL1 (that is, the impedance composed of R2 and L2).

Accordingly, when the above-described equivalent circuit is formed, the magnitude of the eddy current I1 applied to the heating target object HO having magnetism may be greater than the magnitude of the eddy current I2 applied to the first thin-film TL1. More specifically, a substantial portion of the eddy current may be applied to the heating target object HO so that the heating target object HO may be heated.

That is, when the heating target object HO is made of the magnetic material, the above-described equivalent circuit is formed and thus a substantial portion of the eddy current is applied to the heating target object HO, such that the first working coil WC1 may directly heat the heating target object HO.

In another example, a portion of the eddy current is also applied to the first heating thin-film coating TL1 so that the first heating thin-film coating TL1 may be slightly heated, and thus the heating target object HO may be indirectly slightly heated by the first heating thin-film coating TL1. However, an amount by which the heating target object HO is indirectly heated by the first heating thin-film coating TL1 may not be significant, compared to an amount by which the heating target object HO is directly heated by the first working coil WC1.

On the other hand, a case where the heating target object is made of a non-magnetic object is as follows.

Referring to FIGS. 3 and 9, when the heating target object HO that does not exhibit magnetism is disposed on the upper surface of the upper plate 15 and the first working coil WC1 operates, impedance may not exist in the heating target object HO that does not exhibit the magnetism, while the impedance may exist in the first heating thin-film coating TL1. That is, the resistance component R and the inductance component L may exist only in the first heating thin-film coating TL1.

Accordingly, the eddy current I may be applied only to the first heating thin-film coating TL1, and the eddy current may not be applied to the heating target object HO that does not exhibit the magnetism. More specifically, the eddy current I may be applied only to the first heating thin-film coating TL1 so that the first heating thin-film coating TL1 may be heated.

That is, as described above, when the heating target object HO is made of a non-magnetic material, the eddy current I is applied to the first heating thin-film coating TL1 to heat the first heating thin-film coating TL1, while the heating target object HO that does not exhibit magnetism may be indirectly heated by the first heating thin-film coating TL1 directly heated by the first working coil WC1.

For reference, a protection temperature of the upper plate 15 may be preset by an upper plate manufacturer or a cooktop manufacturer. That is, when the upper plate manufacturer transmits information on a life time of the upper plate based on a temperature to the cooktop manufacturer, the cooktop manufacturer may calculate a product life time in consideration of a cooktop use time duration and set the protection temperature of the upper plate 15.

In addition, a temperature sensor may be mounted on a region of the upper plate 15 to sense a temperature change of the upper plate 15, and may provide the sensed temperature information to the above-described control module.

In summary, regardless of whether the heating target object HO is made of a magnetic material or a non-magnetic material, the heating target object HO may be directly or indirectly heated by one heat source, that is, the first working coil WC1. That is, when the heating target object HO is made of a magnetic material, the first working coil WC1 directly heats the heating target object HO. When the heating target object HO is made of a non-magnetic material, the first heating thin-film coating TL1 heated by the first working coil WC1 may indirectly heat the heating target object HO.

As described above, the induction heating type cooktop 1 according to an embodiment of the present disclosure may heat both the magnetic body and the non-magnetic body, and thus may heat the heating target object regardless of the placement position and the type of the heating target object. Accordingly, the user may place the heating target object on an arbitrary heating area on the upper plate without having to determine whether the heating target object is made of a magnetic material or a non-magnetic material, thereby improving the convenience of use.

In addition, the induction heating type cooktop 1 according to an embodiment of the present disclosure may directly or indirectly heat the heating target object with the same heat source, and thus there is no need to provide a separate heating plate or a radiant heater. Accordingly, not only heating efficiency may be increased, but also a material cost may be reduced.

Hereinafter, an induction heating type cooktop according to another embodiment of the present disclosure will be described.

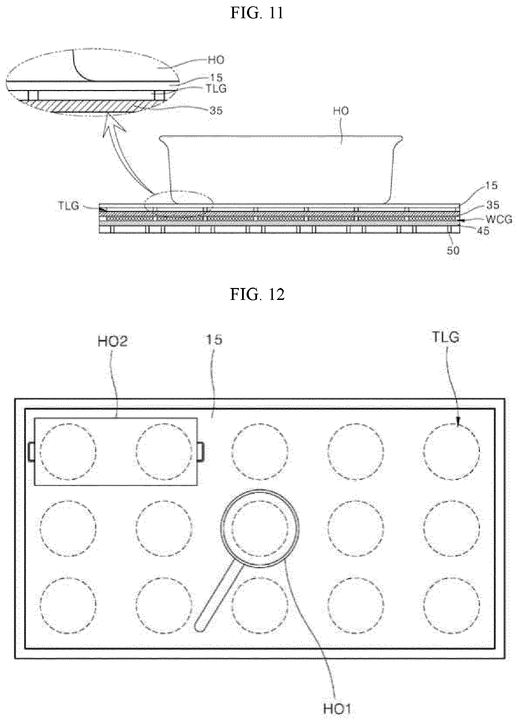

FIG. 10 is a diagram for illustrating an induction heating type cooktop according to another embodiment of the present disclosure. FIG. 11 is a diagram for illustrating components disposed inside a casing of the induction heating type cooktop shown in FIG. 10. FIG. 12 is a diagram for illustrating a state in which a heating target object is disposed on the induction heating type cooktop illustrated in FIG. 10.

For reference, the induction heating type cooktop 2 according to another embodiment of the present disclosure is the same as the induction heating type cooktop 1 of FIG. 1 except for some components and effects, and thus, differences will be mainly described.

Referring to FIGS. 10 and 11, an induction heating type cooktop 2 according to another embodiment of the present disclosure may be a zone free type cooktop, unlike the induction heating type cooktop 1 of FIG. 1.

Specifically, the induction heating type cooktop 2 may include a casing 25, a cover plate 20, a plurality of heating thin-film coatings TLG, an thermal insulator 35, a plurality of working coils WCG, a shielding plate 45, a support member 50, a cooling fan (not shown), a spacer (not shown), and a control module (not shown).

In this regard, the plurality of heating thin-film coatings TLG and the plurality of working coils WCG may overlap each other in the vertical direction, respectively, and may be positioned in a corresponding manner to each other in a one-to-one manner.

In another example, the plurality of heating thin-film coatings TLG and the plurality of working coils WCG may have a many-to-one correspondence or a many-to-one correspondence rather than the one-to-one correspondence. However, for convenience of illustration, in another embodiment of the present disclosure, a case in which the plurality of heating thin-film coatings TLG and the plurality of working coils WCG are arranged in the correspond manner to each other in the one-to-one manner will be described by way of example.

The induction heating type cooktop 2 is the zone-free type cooktop including the plurality of heating thin-film coatings TLG and the plurality of working coils WCG. Accordingly, the cooktop 2 according to the present disclosure may simultaneously heat one heating target object HO using some or all of the plurality of working coils WCG or may simultaneously heat one heating target object HO using some or all of the plurality of heating thin-film coatings TLG. In another example, some or all of the plurality of working coils WCG and some or all of the plurality of heating thin-film coatings TLG may be used to heat the heating target object HO.

Therefore, as illustrated in FIG. 10, in a region (e.g., the upper plate 15 region) in which the plurality of working coils (WCG of FIG. 8) and the plurality of heating thin-film coatings TLG are present, heating target objects HO1 and HO2 can be heated regardless of the sizes, positions, and types of the heating target objects HO1 and HO2.

### Example

Hereinafter, the configuration and effect of the substrate for home appliances of the present disclosure will be described in more detail through preferred embodiments of the present disclosure. However, this is presented as a preferred example of the present disclosure and cannot be interpreted as limiting the present disclosure in any sense.

The contents not described herein may be sufficiently technically inferred by those skilled in this technical field, and thus the description thereof will be omitted.

### 1. Manufacturing of substrate for home appliances

### (1) Present Example

The main substrate made of a ceramic glass material was prepared, and the adhesive layer, the color layer, and the protective layer were sequentially deposited thereon to form the colored coating stack thereon. The adhesive layer, the color layer, and the protective layer were formed based on the thickness, components, and contents as indicated in Table 1 set forth below.

**Table 1**

| Layer | Thickness (*µ*m) | Components | Content (wt%) |
|---|---|---|---|
| Adhesive layer | 7 | methyl polysiloxane | 60 |
| | | IPA(Isopropyl alcohol) | 40 |
| Color layer | 50 | phenyl polysiloxane | 50 |
| | | ZnO, Al₂O₃ | 5 |
| | | TiO2-coated mica pigment | 15 |
| | | Tris (2,4-di-tert-butylphenyl) phosphite | 0.5 |
| | | IPA(Isopropyl alcohol) | balance |
| Protective layer | 5 | silica sol-gel | 100 |

The colored coating stack was formed in a screen printing scheme. The adhesive layer was formed by coating an adhesive layer paste coating solution on one surface of the main substrate. The color layer paste coating solution was directly coated on the adhesive layer without a separate curing process on the adhesive layer to form the color layer. In this case, the color layer was formed by drying the color layer paste coating solution at about 200° C for 10 minutes and then curing the same at 400° C for 20 minutes. Thereafter, the protective layer paste coating solution was coated on the color layer to form the protective layer.

### (2) Comparative Example

A substrate for home appliances according to Comparative Example was manufactured in the same manner as Present Example except that the antioxidant (Tris(2,4-di-tert-butylphenyl)phosphate) as used in the color layer in the above Present Example was excluded.

### 2. Evaluation of physical properties of substrate for home appliances

### (1) Evaluation of Discoloration

The substrate according to each of Present Example and Comparative Example was left in a high temperature furnace at 400° C for 168 hours, and then, discoloration thereof was evaluated.

The discoloration evaluation was performed using a color difference measurement scheme (CIE Lab).
Measurement equipment: Spectrophotometer (manufacturer: Konica Minolta. Model Name: CM-700d)
Measurement scheme: After measuring the CIE Lab value before and after heat resistance evaluation, △E (√△L²+△a²+△b²) is obtained.

The L value has a range of 0 (Black) to 100 (White), the a value has a range of + (Red) to 0 (Gray) to (-) (Green), and the b value has a range of + (Yellow) to 0 (Gray) to (-) (Blue), and these values are displayed in the three-dimensional manner. The color difference △E is measured as the distance between two points.

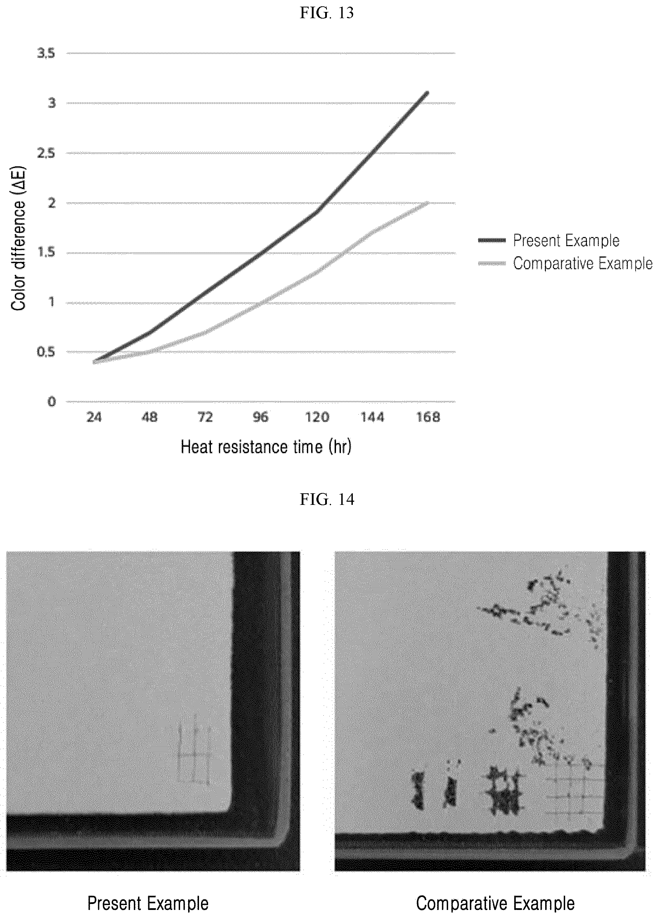

Referring to FIG. 13, at 168 hours of a heat resistance time, in Comparative Example, the color difference exceeds 3, while in Present Example, the color difference is 2. Thus, the discoloration of Present Example decreases.

### (2) Evaluation of durability of substrate for home appliances

Referring to FIG. 14, it may be identified that based on 400°C and 168 hours, when being observed with the naked eye, the coating was peeled off in Comparative Example, while the peeling of the coating did not occur in Present Example.

Although the embodiments of the present disclosure have been described in more detail with reference to the accompanying drawings, the present disclosure is not necessarily limited to these embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of the present disclosure is not limited by these embodiments. Therefore, it should be understood that the embodiments described above are not restrictive but illustrative in all respects. In addition, even though an effect of a configuration of the present disclosure is not explicitly described in describing the embodiment of the present disclosure above, it is obvious that the predictable effect from the configuration should be recognized.

## Claims

1. A substrate for home appliances, the substrate comprising:
a main substrate; and
a colored coating stack disposed on a surface of the main substrate,
wherein the colored coating stack includes:
an adhesive layer in contact with the surface of the main substrate,
a color layer disposed on an upper surface of the adhesive layer; and
a protective layer disposed on an upper surface of the color layer.

2. The substrate for home appliances of claim 1, wherein the color layer is formed using a color layer paste coating solution including a phenyl-based polysiloxane and a phosphite-based antioxidant.

3. The substrate for home appliances of claim 2, wherein the color layer paste coating solution further includes an effect pigment composed of a substrate coated with a metal oxide.

4. The substrate for home appliances of claim 3, wherein the color layer paste coating solution includes:
30 to 60 wt % of the phenyl-based polysiloxane;
0.01 to 1 wt % of the antioxidant;
8 to 20 wt % of the effect pigment;
1 to 10 wt % of an inorganic color pigment; and
10 to 60 wt % of a solvent.

5. The substrate for home appliances of any one of claims 1 to 4, wherein the adhesive layer is formed using an adhesive layer paste coating solution including methyl polysiloxane.

6. The substrate for home appliances of claim 5, wherein the adhesive layer paste coating solution includes:
30 to 70 wt % of the methyl-based polysiloxane; and
30 to 70 wt % of a solvent.

7. The substrate for home appliances of any one of claims 1 to 6, wherein the protective layer is formed using a protective layer paste coating solution including an inorganic material or silica sol-gel.

8. The substrate for home appliances of any one of claims 1 to 7, wherein a thickness of the adhesive layer is in a range of 1 to 10 *µ*m,
wherein a thickness of the color layer is in a range of 30 to 100 *µ*m,
wherein a thickness of the protective layer is in a range of 1 to 10 *µ*m.

9. The substrate for home appliances of any one of claims 1 to 8, wherein the main substrate includes a ceramic glass material.

10. An induction heating type cooktop comprising:
a casing;
a cover plate coupled to an upper end of the casing and including an upper plate on which a heating target object is to be seated;
a working coil disposed inside the casing and configured to heat the heating target object;
an thermal insulator disposed on an upper surface of the working coil; and
a heating thin-film coating disposed on one surface of the upper plate or one surface of the thermal insulator, wherein the heating thin-film coating has a stacked structure in which an adhesive layer and a heating layer are sequentially stacked,
wherein the upper plate is embodied as the substrate for home appliances of claim 1.

11. The induction heating type cooktop of claim 10, or 11, wherein the heating thin-film coating further includes a protective layer stacked on one surface of the heating layer.

12. The induction heating type cooktop of claim 10, 11, or 12, wherein the induction heating type cooktop further comprises:
a shielding plate mounted on a lower surface of the working coil so as to prevent a magnetic field generated when the working coil is operating from being transmitted downwardly;
a support member installed between a lower surface of the shielding plate and a lower surface of the casing so as to support and push the shielding plate upwardly; and
a cooling fan installed inside the casing and configured to cool the working coil.

13. The induction heating type cooktop of claim 12, wherein the support member includes an elastic body for supporting and pushing the shielding plate upwardly.

14. The induction heating type cooktop of claim 12, or 13, wherein the cooling fan is configured to sucks air outside the casing and transfers the sucked air to the working coil, or to suck heated air inside the casing and discharge the heated sucked air to an outside out of the casing,
wherein the thermal insulator prevents heat generated while the heating target object or the heating thin-film coating is heated under operation of the working coil from being transferred to the working coil.
